# EUROPÄISCHE PATENTSCHRIFT

(11) **EP 4 254 919 B1**
(45) Veröffentlichungstag und Bekanntmachung des Hinweises auf die Patenterteilung: **17.09.2025**
(21) Anmeldenummer: 23183024.1
(22) Anmeldetag: 22.12.2017
(51) Int. Cl.: H04M 1/02, H04B 1/10, H04B 1/7097, H04B 7/005, H04M 1/725, H04M 1/724, H04M 1/72513

(54) **NETZWERKGERÄT FÜR EIN INTERCOM-NETZWERK**
NETWORK DEVICE FOR AN INTERCOM NETWORK
DISPOSITIF DE RÉSEAU POUR UN RÉSEAU D'INTERCOMMUNICATION

(30) Priorität: 30.03.2017 DE 102017106894; 19.07.2017 DE 102017116273
(43) Veröffentlichungstag der Anmeldung: 04.10.2023
(62) Teilanmeldung aus: 17401131.2
(73) Patentinhaber: RIEDEL Communications International GmbH, 42109 Wuppertal (DE)
(72) Erfinder: Riedel, Thomas, 42109 Wuppertal (DE)
(74) Vertreter: Roche, von Westernhagen & Ehresmann

(56) Entgegenhaltungen:
- EP-A1- 1 071 228
- EP-A1- 1 361 687
- EP-B1- 1 735 935
- US-A- 5 870 430
- US-A1- 2002 123 318
- US-A1- 2003 176 194
- US-A1- 2004 116 071
- US-A1- 2006 068 715

## Beschreibung

Die Erfindung bezieht sich auf ein Netzwerkgerät für ein Intercom-Netzwerk nach Anspruch 1.

Derartige Netzwerkgeräte ermöglichen einen Duplex-Hör- und Sprechbetrieb zur Audio-Kommunikation mit anderen Teilnehmern eines Intercom-Netzwerkes.

Ein solches Netzwerkgerät im Sinne des Anspruches 1 wird gemeinhin auch als Sprechstelle bezeichnet. Man unterscheidet stationäre Sprechstellen und mobile Sprechstellen, z. B. gürtelgetragene Sprechstellen (Belt-Packs).

Ein Intercom-Netzwerk kann einen oder mehrere stationäre Teilnehmer, und einen oder mehrere mobile Teilnehmer aufweisen. Es sind auch Intercom-Netzwerke bekannt, die nur stationäre oder nur mobile Teilnehmer aufweisen.

Die Teilnehmer werden unter Zwischenschaltung von sogenannten Vermittlungsstellen miteinander verbunden.

Netzwerkgeräte nach dem Anspruch 1 werden von der Anmelderin seit geraumer Zeit entwickelt und vertrieben und in entsprechenden Intercom-Netzwerken eingesetzt. Zur Würdigung des Standes der Technik wird beispielsweise auf die deutschen Patentanmeldungen DE 10 2014 011 963 A1, DE 10 2016 123 966 A1 und DE 10 2016 123 968 A1 der Anmelderin verwiesen.

Das bekannte Netzwerkgerät der eingangs beschriebenen Art der Anmelderin umfasst ein Gehäuse, in dem sich ein Kommunikationsmodul befindet. Das Kommunikationsmodul ist ein übliches, kommerziell erhältliches elektronisches Modul, mittels dem eine Funkverbindung zu anderen Teilnehmern des Intercom-Netzwerkes herstellbar ist. Zu anderen Teilnehmern wird mittels des Kommunikationsmoduls eine Funkverbindung hergestellt, die der Übermittlung von Audio-Signalen dient. Die Funkverbindung ermöglicht insoweit eine bi-direktionale Übertragung von Audio-Signalen.

Die Duplex-Audiokommunikation, also die bidirektionale Übertragung von Audiodaten zwischen den einzelnen Teilnehmern, erfolgt, soweit drahtlos, durch diese Funkverbindung.

Die Erfindung bezieht sich nur auf solche Netzwerkgeräte, die dazu ausgelegt sind, eine Funkverbindung nach dem DECT-Protokoll oder nach einem anderen Protokoll zu ermöglichen. Als DECT-Protokoll wird in fachmännisch üblicher Weise ein internationaler Standard für Telekommunikation mittels Funktechnologie bezeichnet, der für Schnurlostelefone entwickelt worden ist. Der DECT-Funkstandard ist dabei für eine Telefonie innerhalb von Gebäuden ausgelegt, mit einer Reichweite von maximal etwa 50 Metern. Die Datenübertragung basiert auf einem Time-Division-Duplex- sowie Time-Division-Multiple-Access- und Frequency-Division-Multiple-Access-Verfahren. Genutzt wird vornehmlich ein Frequenzbereich zwischen 1.880 bis 1.900 Mhz. Es bestehen auch Erweiterungsfrequenzbänder in Frequenzbereichen zwischen 1.900 und 2.480 Mhz.

Andere Protokolle im Sinne dieser Patentanmeldung sind solche Protokolle, die eine entsprechende Funksignalübertragung in den Frequenzbereichen VHF, UHF, 2,4 GHz oder 5,8 GHz ermöglichen.

Zur Vermeidung von Wiederholungen wird im Rahmen dieser Patentanmeldung der Begriff DECT-Protokoll in einem weiteren Sinne verstanden, und umfasst neben den eigentlichen DECT-Frequenzbereichen auch VHF-, UHF-, 2,4 GHz- und 5,8 GHz-Frequenzbänder bzw. Frequenzbereiche.

Gattungsgemäße Netzwerkgeräte für Intercom-Netzwerke werden in Intercom-Netzwerken eingesetzt, die insbesondere temporär, auch in oder an Gebäuden, insbesondere auch in großen Hallen, eingesetzt werden. Dabei können auch mehrere mobile Netzwerkgeräte der gattungsgemäßen Art zeitgleich eingesetzt werden.

In manchen Anwendungsfällen kann es beim Betrieb der gattungsgemäßen bekannten Netzwerkgeräte zu Störungen in der Kommunikation zwischen den Teilnehmern des Intercom-Netzwerkes kommen.

Hiervon ausgehend besteht die Aufgabe der Erfindung darin, ein Netzwerkgerät derartig weiterzubilden, dass derartige Störungen vermieden werden.

Die Erfindung löst diese Aufgabe mit den Merkmalen des Anspruches 1.

Das Prinzip der Erfindung besteht darin, dem Netzwerkgerät eine Einrichtung zuzuordnen, die eine mögliche multipath-Interferenz verhindert oder vermindert.

Diese Einrichtung umfasst eine Vorrichtung zur Signalkorrektur, um das multipath-Phänomen zu verhindern, bzw. zu vermindern.

Die Erfindung erkennt, dass in bestimmten Anwendungssituationen eine Funkverbindung zwischen zwei drahtlos miteinander verbundenen Teilnehmern des Intercom-Netzwerkes zu einer Generierung mehrerer Funkwege oder Funkpfade führt.

So kann beispielsweise ein erster Funkpfad zwischen einem ersten Netzwerkgerät und einen zweiten Netzwerkgerät entlang der kürzesten Wegstrecke (line of sight) zwischen diesen beiden Netzwerkgeräten ausgerichtet sein.

Da eine Abstrahlung der Funksignale aber nicht - wie z. B. ein Laserstrahl - entlang einer Geraden erfolgt, sondern entlang eines unter Umständen auch sehr großen Raumwinkelbereiches, kann ein Teil der abgestrahlten Signalleistung - unter Ausbildung und entlang eines zweiten Funkweges oder eines zweiten Funkpfades - von dem sendenden Netzwerkgerät zu dem empfangenden Netzwerkgerät unter Reflektion beispielsweise an einer Gebäudefläche gesendet werden. Derartige reflektierte Funksignale werden also entlang eines zweiten Funkpfades zwischen diesen beiden Netzwerkgeräten ebenfalls übermittelt.

Insbesondere in großen Hallen, weiter insbesondere bei großen Distanzen zwischen den untereinander über die Funkstrecke verbundenen Netzwerkgeräten, und insbesondere bei dem Betrieb eines Intercom-Netzwerkes mit vielen Netzwerkgeräten, kann dieses als Multipfad-Phänomen (englisch: multipath-propagation) an sich bekannte Phänomen auftreten. Bei dem das Funksignal empfangenden Netzwerkgerät kommt es im Stand der Technik zu einer Überlagerung oder Interferenz der entlang unterschiedlicher Pfade oder Wege empfangenen, an sich identischen, Funksignale. Infolge dieser Interferenz, beispielsweise aufgrund unterschiedlicher Laufzeiten oder aufgrund von Phasenverschiebungen, kann eine konstruktive Überlagerung oder eine destruktive Überlagerung der Funksignale auftreten. Hierdurch kann die Signalqualität der empfangenen Funksignale erheblich leiden. Unter Umständen kann sogar eine teilweise oder temporäre Unterbrechung der Funkverbindung auftreten.

Dieses geschilderte Phänomen der multipath-propagation ist bei anderen Anwendungsfällen, als den erfindungsgemäßen, nämlich insbesondere bei Mobiltelefonen und GPS-Systemen, grundsätzlich bekannt. Aus diesen Anwendungsbereichen sind auch elektronische Lösungsansätze zur Verhinderung oder Verminderung von Interferenzen bekannt.

Bei Netzwerkgeräten für Intercom-Netzwerke der gattungsgemäßen Art, die Funkverbindungen nach dem DECT-Protokoll aufbauen, sind allerdings keinerlei Einrichtungen zur Reduzierung oder Verminderung von multipath-Interferenzen bekannt.

Da DECT ein Funkstandard ist, der für Schnurlostelefone mit nur geringen Reichweiten ausgelegt war, traten bei Schnurlostelefonen und anderen Geräten, die die DECT-Funktechnologie verwenden, die eingangs geschilderten Probleme, die bei Netzwerkgeräten eines Intercom-Netzwerkes aufgefallen sind, gar nicht auf.

Die Erfindung erkennt, dass zur Verminderung von multipath-Interferenzen eine entsprechende Elektronik im Netzwerkgerät angeordnet werden kann.

Hierdurch können die im Stand der Technik auftretenden Probleme gelöst werden.

Das erfindungsgemäße Netzwerkgerät ist ein mobiles von einer Person tragbares Gerät. Das erfindungsgemäße Netzwerkgerät stellt jedenfalls eine Funkverbindung zu einem anderen Teilnehmer des Intercom-Netzwerkes her. Dabei kann vorgesehen sein, dass zwei Netzwerkgeräte, z. B. zwei mobile Netzwerkgeräte, unmittelbar miteinander eine Funkverbindung nach dem DECT-Protokoll eingehen. Von der Erfindung ist aber auch umfasst, wenn das erfindungsgemäße Netzwerkgerät eine Funkverbindung nach dem DECT-Protokoll zu einem anderen Teilnehmer des Intercom-Netzwerkes, z. B. zu einer Vermittlungsstelle oder zu einer sogenannten Basis oder zu einer Antenne, eine Funkverbindung herstellt. Als Basis oder Antenne wird ein Teilnehmer des Intercom-Netzwerkes bezeichnet, über den jedenfalls Funksignale von mobilen Netzwerkgeräten empfangen, oder an diese versendet werden können.

Die Erfindung bezieht sich auf ein Netzwerkgerät für ein Intercom-Netzwerk, bei dem sich Benutzer mit tragbaren Netzwerkgeräten mobil bewegen können, und zu unterschiedlichen Zeitpunkten mit unterschiedlichen anderen Teilnehmern des Netzwerkes DECT-Funkverbindungen eingehen können.

Das erfindungsgemäße Netzwerkgerät ermöglicht eine Duplex-Audiokommunikation mit anderen Teilnehmern des Intercom-Netzwerkes, insbesondere einen gleichzeitigen Hör- und Sprechbetrieb. Insbesondere wird das erfindungsgemäße Netzwerkgerät auch als Sprechstelle bezeichnet.

Das Netzwerkgerät weist erfindungsgemäß eine Einrichtung zur Verhinderung oder zur Verminderung von multipath-Interferenzen auf. Hierbei kann auf an sich bekannte Verfahren und auf an sich bekannte wie elektronische Bauelemente zurückgegriffen werden, die bei anderen Einsatzzwecken, wie beispielsweise bei Mobiltelefonen, im Stand der Technik bereits Anwendung finden. Hier muss allerdings eine Anpassung an die besonderen Frequenzen, die bei einem DECT-Protokoll verwendet werden, sowie an dem besonderen Signalverarbeitungsverfahren, das bei einem DECT-Protokoll verwendet wird, erfolgen.

Die erfindungsgemäß vorgesehene Einrichtung zur Verhinderung oder Verminderung von multipath-Interferenzen kann beispielsweise auf adaptive Filter zurückgreifen, die auf der "Least-squares-method" beruhen. Die entsprechenden Informationen hierzu sind z. B. dem Artikel "An adaptive multpath estimation/elimination technique for GPS signals reception" zu entnehmen, Masateru Minami et al, Electron CommJpan Pt1, 86(1): 74-82, 2003.

Andere geeignete Vorrichtungen und Verfahren, die die erfindungsgemäße Einrichtung verwenden kann, sind beispielsweise von der Firma Novatel zu beziehen. Informationen finden sich beispielsweise in "Mattos, Philip G., "Multipath Elimination for the Low-Cost Consumer GPS", Proceedings of the 9th International Technical Meeting of the Satellite Division of The Institute of Navigation (ION GPS 1996), Kansas Citiy, MO, September 1996, pp. 665-671".

Das erfindungsgemäße Netzwerkgerät kann für die Ausbildung einer Einrichtung zur Verhinderung oder Verminderung von multipath-Interferenzen auch Vorrichtungen und Verfahren beschreiben, wie sie in dem Artikel "Eliminating multipath fading improves wireless signal reception, SPIE 7. August 2006" von George W. Webb et al beschrieben sind.

Im übrigen sind kommerzielle Bauelemente oder Bausteine, auf die zur Bereitstellung einer Einrichtung zur Verwendung im erfindungsgemäßen Netzwerkgerät - eine entsprechende Anpassung an das DECT-Verfahren vorausgesetzt - zurückgegriffen werden kann, z. B. von der Firma Novatel unter der Bezeichnung MET (Multipath Elimination Technology) wenigstens seit dem Jahre 1994 erhältlich.

Schließlich wird zum besseren Verständnis für die Einrichtung eines erfindungsgemäßen Netzwerkgerätes verwendbaren Technologie auch auf den Abschnitt 22.4.2 "Single-Antenna Multipath Mitigation Techniques" in dem Signal Processing for Mobile Communications Handbook, verwiesen. Hier sind als mögliche Verfahrensarten sowohl das Prinzip des "Narrow Correlator", als auch das Prinzip des "Multipath Elimination Delay Lock Loop" hinreichend beschrieben, die beide bei der Einrichtung eingesetzt werden können.

Weitere Vorrichtungen und Verfahren, die für ein erfindungsgemäßes Netzwerkgerät und zur Ausbildung der Einrichtung eingesetzt werden können, sind - für andere Anwendungszwecke - beispielsweise in den Druckschriften EP 2 244 098 B1, EP 2 215 794 B1, EP 2 211 516 A1, EP 1 982 523 B1, EP 1 679 818 A1, EP 1 616 368 B1, EP 1 361 687 B1 und EP 1 221 793 B1 beschrieben.

Aus der EP 1 735 935 B1 geht ein Verfahren zur Übermittlung eines Datenstroms zu einem Zielort hervor. Es kann sich dabei insbesondere um Audiodaten- ströme handeln. Der Datenstrom umfasst eine Sequenz einer Mehrzahl von Datenpaketen. Für den Fall, dass ein einzelnes Datenpaket nicht ordnungsgemäß an dem Zielort ankommt, wird dieses von der Quelle nochmals übermittelt. Während die erstmalige Übertragung des Datenpaketes unkomprimiert erfolgt, erfolgt die Wiederholung der Datenübertragung des Datenpaketes komprimiert. Das beschriebene Verfahren zur Wiederholung einer Datenübertragung einzelner Pakete kann durch andere bekannte Techniken ergänzt werden. Erwähnt wird diesbezüglich DFE (desicion feedback equalization) und FSE (fractionally spaced equalizer). Hierdurch sollen Multipath-geschwächte Signale egalisiert werden können, und schmalbandige zusätzliche Interferenzen gelöscht werden können. Die Druckschrift offenbart kein Netzwerkgerät, das eine Einrichtung zur Verhinderung oder Verminderung von Multipath-Interferenzen in Funkverbindungen, die dem DECT-Protokoll unterliegen, aufweist. Es wird auch auf die Druckschriften US 2003/176194 A1, US 2004/116071 A1, EP 1 361 687 A1, EP 1 071 228 A1, US 5 870 430 A, US 2002/123318 A1 und US 2006/068715 A1 verwiesen.

Gemäß einer vorteilhaften Ausgestaltung der Erfindung weist das Netzwerkgerät einen Lautsprecher und ein Mikrophon auf. Hierdurch besteht die Möglichkeit, das Netzwerkgerät als Sprechstelle bereitzustellen, und auf bekannte, herkömmliche Konstruktionen und Bauweisen von Netzwerkgeräten zurückzugreifen.

Gemäß der Erfindung weist das Netzwerkgerät wenigstens eine programmierbare oder konfigurierbare Taste auf. Insbesondere kann das Netzwerkgerät eine Vielzahl derartiger Tasten aufweisen.

Die Programmierbarkeit der Taste ermöglicht. die Bereitstellung einer direkten Audioverbindung zwischen dem Netzwerkgerät und einem anderen auszuwählenden Teilnehmer des Intercom-Netzwerkes.

Gemäß der Erfindung ist das Netzwerkgerät als ein mobiles, von einer Person tragbares Gerät ausgebildet. Das Netzwerkgerät ist als Belt-Pack ausgebildet sein. Ein Belt-Pack ist gemäß dieser Patentanmeldung ein mobiles Netzwerkgerät, das den Anschluss eines Headsets, also einer Mikrophon-Kopfhörer-Kombination, ermöglicht.

Gemäß der Erfindung weist die Einrichtung einen oder mehrere Equalizer auf. Die Einrichtung kann zusätzlich einen RF-Filter aufweisen. Mit Hilfe dieser elektronischen Bauelemente kann eine Verhinderung oder Verminderung von multipath-Interferenzen erfolgen. Mithilfe dieser elektronischen Bauelemente kann eine Signalkorrektur vorgenommen werden, um das multipath-Phänomen zu verhindern bzw. zu vermeiden.

Equalizer sind elektronische Bauelemente, die im Stand der Technik bei anderen Anwendungen, z. B. bei der GSM-Übertragung, dazu verwendet werden, eine Signalkorrektur vorzunehmen, um multipath-Phänomenen zu reduzieren.

Gemäß einer weiteren vorteilhaften Ausgestaltung der Erfindung verwendet die Einrichtung ein OFDM (Orthogonal Frequency Division Modulation) -Verfahren, oder ein entsprechendes de-modulier-Verfahren. Auch derartige elektronische Bauelemente, die auf solche Verfahren zurückgreifen, sind im Stand der Technik hinlänglich bekannt, um multipath-Interferenzen auszuschalten oder zu reduzieren.

Gemäß einer weiteren vorteilhaften Ausgestaltung der Erfindung umfasst die erfindungsgemäße Einrichtung einen Rake-Receiver. Auch derartige Rake-Receiver sind im Stand der Technik - für andere Anwendungszwecke - bekannt, um multipath-Interferenzen zu vermeiden.

Gemäß einer weiteren vorteilhaften Ausgestaltung der Erfindung ist die Einrichtung innerhalb des Gehäuses angeordnet. Dies ermöglicht eine kompakte Bauweise des erfindungsgemäßen Netzwerkgerätes.

Der Erfindung liegt die Aufgabe zugrunde, ein Intercom-Netzwerk der bekannten Art derartig weiterzubilden, dass die Audio-Signalübertragung zwischen den Teilnehmern verbessert wird.

Weitere Vorteile der Erfindung ergeben sich aus den nicht zitierten Unteransprüchen, sowie anhand der nachfolgenden Beschreibung der in den Figuren dargestellten Ausführungsbeispiele.

In den Figuren zeigen:
- Fig. 1: in einer schematischen blockschaltbildartigen Ansicht ein Ausführungsbeispiel eines erfindungsgemäßen Intercom-Netzwerkes, wobei zwei erfindungsgemäße mobile Netzwerkgeräte dargestellt sind,
- Fig. 2: in einer teilgeschnittenen schematischen und teilweise perspektivischen Ansicht ein Ausführungsbeispiel eines erfindungsgemäßen Netzwerkgerätes, das als Belt-Pack ausgebildet ist, und daran angeschlossen ein Headset, unter Veranschaulichung zweier unterschiedlicher Funkpfade zwischen dem Belt-Pack und einem Sendegerät des Intercom-Netzwerkes, und
- Fig. 3: in einer schematischen Ansicht eine Bedienperson, die ein erfindungsgemäßes, als Belt-Pack ausgebildetes Netzwerkgerät und ein daran angeschlossenes Headset trägt.

Ausführungsbeispiele der Erfindung sind in der nachfolgenden Figurenbeschreibung, auch unter Bezugnahme auf die Zeichnungen, beispielhaft beschrieben. Dabei werden der Übersichtlichkeit halber - auch soweit unterschiedliche Ausführungsbespiele betroffen sind - gleiche oder vergleichbare Teile oder Elemente oder Bereiche mit gleichen Bezugszeichen, teilweise unter Hinzufügung kleiner Buchstaben, bezeichnet.

Auch wenn in den folgenden Ausführungsbeispielen zahlreiche Merkmale als optional bezeichnet werden, wird dennoch eingeräumt, dass alle im Anspruch 1 definierten Merkmale nicht als optional zu verstehen sind.

Ein erfindungsgemäßes Netzwerkgerät ist anhand des Ausführungsbeispiels in den Figuren dargestellt, und wird in seiner Gesamtheit mit 10 bezeichnet.

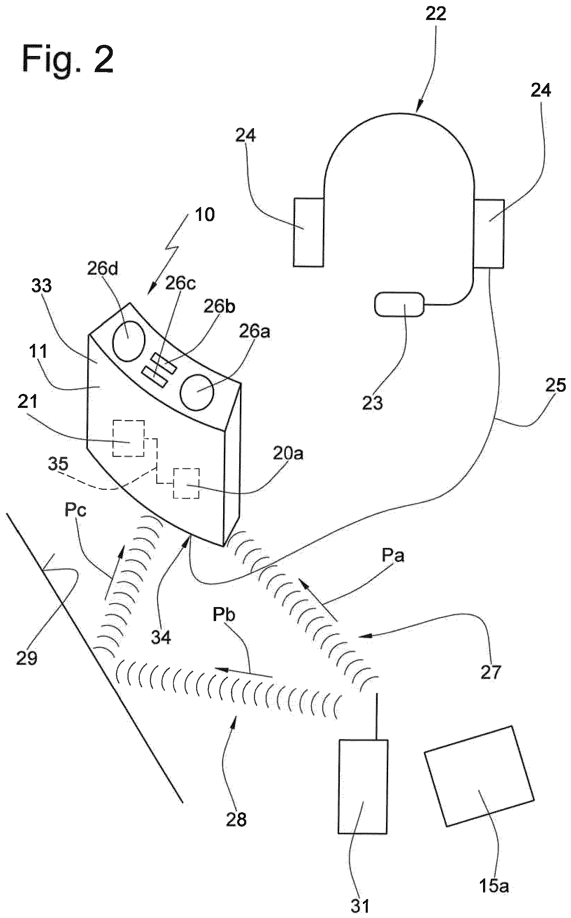

Fig. 2 zeigt ein solches erfindungsgemäßes Netzwerkgerät 10, welches als Belt-Pack 11 ausgebildet ist. An das Belt-Pack 11 ist gemäß Fig. 2 ein Headset 22 über eine Verbindungsleitung 25 angeschlossen. Das Headset 22 weist ein Mikrophon 23 und Lautsprecher 24 auf.

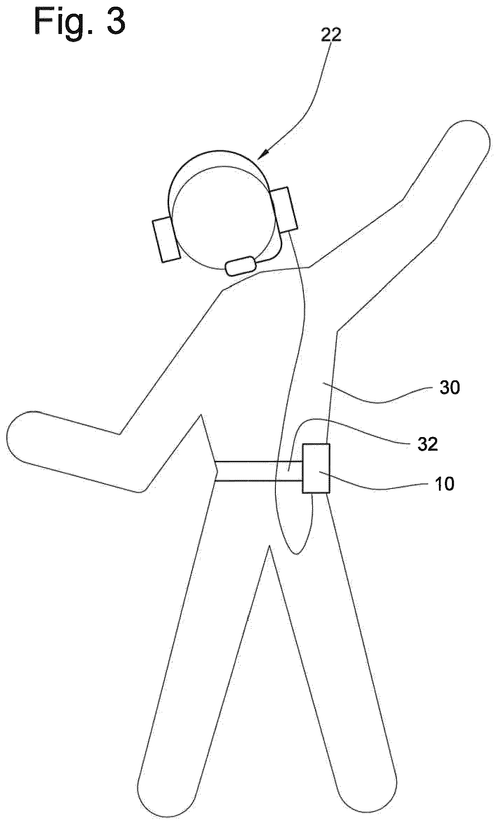

Das Belt-Pack 11 kann, wie Fig. 3 schematisch andeutet, an einem Gürtel 32 einer Bedienperson 30 mit einer nicht dargestellten Befestigungseinrichtung festgelegt werden, und von der Bedienperson 30 getragen werden.

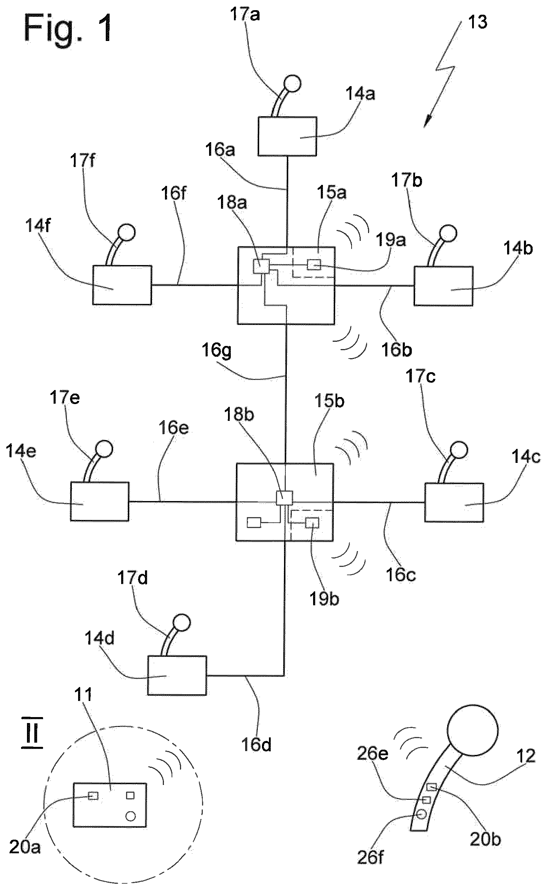

Das Belt-Pack 11 ist Bestandteil eines Intercom-Netzwerkes 13, wie es von seiner Struktur und Architektur her in dem blockschaltbildartigen Diagramm der Fig. 1 dargestellt ist.

Das Intercom-Netzwerk 13 umfasst bei dem Ausführungsbeispiel der Fig. 1 insgesamt sechs stationäre Teilnehmer, die mit den Bezugszeichen 14a, 14b, 14c, 14d, 14e, 14f versehen sind. Bei diesen stationären Teilnehmern 14 handelt es sich um sogenannte Sprechstellen.

Jede der Sprechstellen 14a, 14b, 14c, 14d, 14e, 14f ist über eine eigene Verbindungsleitung 16a, 16b, 16c, 16d, 16e, 16f mit einer der beiden Vermittlungsstellen 15a, 15b verbunden. Die Vermittlungsstellen 15a, 15b können untereinander über eine Verbindungsleitung 16g miteinander verbunden sein.

Jede Sprechstelle weist eine Mikrophon-Lautsprecher-Kombination auf. In Fig. 1 ist dargestellt, dass an jeder Sprechstelle 14a, 14b, 14c, 14d, 14e, 14f ein eigenes, fest installiertes Mikrophon 17a, 17b, 17c, 17d, 17e, 17f angeordnet ist. Nicht dargestellt ist in Fig. 1, dass jeder Sprechstelle 14a, 14b, 14c, 14d, 14e, 14f auch ein eigener Lautsprecher zugehörig ist.

Weiter nicht dargestellt ist in Fig. 1, dass jede der Sprechstellen 14a, 14b, 14c, 14d, 14e, 14f eine Vielzahl von konfigurierbaren Tasten oder programmierbaren Tasten aufweist, mit denen durch eine Betätigung eine Bedienperson einer Sprechstelle 14 eine unmittelbare direkte Punkt-zu-Punkt-Verbindung zu einem anderen Teilnehmer an einer anderen Sprechstelle 14a, 14b, 14c, 14d, 14e, 14f herstellen kann.

Die Administration dieser Verbindungswege wird von den Vermittlungsstellen 15a, 15b übernommen. Hierzu weist jede Vermittlungsstelle 15a, 15b wenigstens eine Steuerung 18a, 18b auf, die die entsprechenden Verschaltungen vornimmt.

Die stationären Teilnehmer 14a, 14b, 14c, 14d, 14e, 14f sind, wie der Name andeutet, fest angeordnet, und nicht dazu ausgebildet, bewegt zu werden. Das Intercom-Netzwerk 13 gemäß Fig. 1 verfügt aber auch über eine beliebige Anzahl mobiler Teilnehmer, also mobiler Netzwerkgeräte.

Hierzu gehört das bereits eingangs beschriebene und in Fig. 1 angedeutete Belt-Pack 11, aber auch ein in Fig. 1 dargestelltes mobiles Mikrophon 12.

Mobile Netzwerkgeräte 11, 12 sind von Bedienpersonen 30 tragbar und sind von den Bedienpersonen bewegbar. Während insbesondere die Vermittlungsstellen 15a, 15b fest, d. h. stationär angeordnet sind, können die Bedienpersonen während einer Veranstaltung innerhalb der Reichweite des Intercom-Netzwerkes 13 beliebig bewegt werden.

Dabei kann ein mobiles Netzwerkgerät 11, 12 auch zu unterschiedlichen Zeitpunkten mit unterschiedlichen Vermittlungsstellen 15a, 15b oder anderen Teilnehmern des Intercom-Netzwerkes 13 in eine Funkverbindung treten.

Um eine solche Funkverbindung zwischen einem mobilen Netzwerkgerät 11, 12 und einem anderen Teilnehmer, z. B. 15a, 15b, des Intercom-Netzwerkes 13 bereitstellen zu können, ist an jeder der beiden Vermittlungsstellen 15a, 15b der Fig. 1 jeweils ein Kommunikationsmodul 19a, 19b angeordnet. Auch in jedem mobilen Netzwerkgerät 11, 12 ist ein entsprechendes Kommunikationsmodul 20a, 20b angeordnet.

Das mobile Netzwerkgerät 10 in Form des Belt-Packs 11 kann beispielsweise eine Funkverbindung zu der Vermittlungsstelle 15b herstellen. Hierzu tritt das Kommunikationsmodul 20a des Belt-Packs 11 mit dem Kommunikationsmodul 19b der Vermittlungsstelle 15b in eine Funkverbindung. Die Funkverbindung unterliegt dem DECT-Protokoll. Über die Funkstrecke können Audio-Signale bi-direktional übermittelt werden.

Wird der Belt-Pack 11 von der Bedienperson 30 bewegt, kann zu einem späteren Zeitpunkt das Belt-Pack 11 z. B. auch über das Kommunikationsmodul 20a mit dem Kommunikationsmodul 19a der zweiten Vermittlungsstelle 15a eine entsprechende Funkverbindung eingehen.

Ausweislich Fig. 2 soll veranschaulicht werden, dass die Funkverbindung zwischen einem Belt-Pack 11 und einer Antenne 31 einer multipath-Problematik unterliegt.

Die Antenne 31 der Fig. 2 kann z. B. von einer der beiden Vermittlungsstellen 15a, 15b des Intercom-Netzwerkes 13 der Fig. 1 bereitgestellt sein. Alternativ kann die Antenne 31 auch ein weiteres, zusätzliches Element im Intercom-Netzwerk 13 der Fig. 1 sein, welches mit einer der Vermittlungsstellen 15a, 15b verbunden ist, und an dem bidirektionalen Audio-Datenaustausch teilnimmt. Schließlich kann die Antenne 31 der Fig. 2 auch von einem anderen mobilen Netzwerkgerät 10 bereitgestellt sein, falls eine unmittelbare direkte Übertragung von Funksignalen zwischen mobilen Netzwerkgeräten untereinander erforderlich sein soll.

Fig. 2 veranschaulicht, dass von der Antenne 31 eine Funkverbindung unter Bereitstellung eines ersten Funkpfades Pₐ erreicht wird. Der erste Funkpfad ist die direkte, kürzeste Verbindung (line of sight) zwischen der Antenne 31 bzw. dem in Fig. 2 nicht dargestellten Kommunikationsmodul der Antenne 31, und dem Kommunikationsmodul 20a des Belt-Packs 11.

Fig. 2 verdeutlicht aber darüber hinaus, dass ein zweiter Funkpfad generiert wird, der einen Funkweg P_{b} und eine weitere Teilstrecke, die nach Reflektion von einer Gebäudefläche 29 erzeugt wird, mit P_{c} bezeichnet ist.

Der erste Funkpfad wird insgesamt auch mit dem Bezugszeichen 27, der zweite Funkpfad mit dem Bezugszeichen 28 bezeichnet.

Beide Funkpfade 27, 28 verbinden die Antenne 31 jeweils mit dem Kommunikationsmodul 20a.

Dem Fachmann ist deutlich, dass aufgrund der beiden unterschiedlichen Funkpfade 27, 28 eine Interferenz der elektromagnetischen Wellen im Bereich des Kommunikationsmoduls 20a des Belt-Packs 11 auftreten kann. Insbesondere kann es zu einer konstruktiven oder destruktiven Interferenz kommen. Durch diese Überlagerung können Signale geschwächt oder gar ausgelöscht werden.

Um diesem Phänomen zu begegnen, weist das erfindungsgemäße Belt-Pack 11 eine Einrichtung 21 auf, die dem Kommunikationsmodul 20a zugeordnet ist. Die Zuordnung kann beispielsweise dadurch erfolgen, dass die Einrichtung - wie in Fig. 2 angedeutet - unmittelbar mit dem Kommunikationsmodul 20a über eine Verbindungsleitung 35 verbunden ist. Die Einrichtung 21 kann auch Bestandteil des Kommunikationsmoduls 20a sein. Die Einrichtung 21 kann alternativ dem Kommunikationsmodul 20a im Empfangsweg der Funksignale auch vorgeschaltet sein.

Die Einrichtung 21 kann beispielsweise infolge einer elektronischen Verarbeitung der über die unterschiedlichen Pfade 27, 28 ankommenden Audio-Funksignale eine destruktive Interferenz verhindern, und/oder ein entsprechendes erhaltenes Signal korrigieren und hierdurch das multipath-Phänomen verhindern bzw. vermindern.

Beispielsweise kann die Einrichtung 21 des erfindungsgemäßen Belt-Packs 11 in der Lage sein, unterschiedliche Funkpfade überhaupt zu erkennen, diese zu trennen, und z. B. den Funkpfad 27 mit der besten Signalqualität auszuwählen, und die anderen, über andere Pfade 28 ankommenden Funksignale aber unterdrücken.

Das erfindungsgemäße Netzwerkgerät 10 in Form des Belt-Packs 11 in Fig. 2 umfasst gleichermaßen wie das mobile Mikrophon 12, wenigstens eine programmierbare oder konfigurierbare Taste 26a, 26b, 26c, 26d, 26e. Das erfindungsgemäße Netzwerkgerät 10, in Form des Belt-Packs 11, kann auch ein in Fig. 2 nicht dargestelltes Display aufweisen.

Dem Fachmann ist bei Betrachten der Fig. 2 deutlich, dass neben den beiden dargestellten Funkpfaden 27, 28 natürlich eine Vielzahl weiterer, paralleler und ggf. auch zu einer störenden Interferenz führende Funkpfade entstehen kann. Gleichermaßen ist dem Fachmann deutlich, dass das Problem der multipath-propagation in dem Maße zunimmt, in dem eine Vielzahl mobiler Netzwerkgeräte 10 in dem Intercom-Netzwerk 13 vorhanden ist.

Gemäß dem Ausführungsbeispiel der Fig. 2 ist die Einrichtung 21 innerhalb des Gehäuses 33 des Belt-Packs 11 angeordnet. Von der Erfindung ist auch umfasst, wenn die Einrichtung 21 an dem Gehäuse 33 des Netzwerkgerätes 10, 11 angeordnet ist.

Fig. 2 veranschaulicht eine DECT-Funkstrecke von der Antenne 31 zu dem Belt-Pack 11. Dem Fachmann ist aber deutlich, dass die Funksignalübertragung bi-direktional erfolgt. Demzufolge weist auch die Antenne 31, bzw. die alternativ in Fig. 2 schematisch angedeutete Vermittlungsstelle 15a, sowie weiter vorteilhafterweise jeder andere Teilnehmer des Intercom-Netzwerkes 13, der eine DECT-Funkverbindung zur Übertragung von Audiosignalen ermöglicht, eine entsprechende Einrichtung 21 zur Verminderung oder Vermeidung von multipath-Interferenzen auf.

Das erfindungsgemäße Netzwerkgerät 10 in Form des Belt-Packs 11 der Fig. 2 verfügt über einen Anschluss 34 zur Verbindung mit dem Headset 22. Von der Erfindung sind auch Netzwerkgeräte umfasst, die unmittelbar, in oder an dem Gehäuse oder dem Gehäuse zugeordnet, einen Lautsprecher und ein Mikrophon aufweisen.

Ausweislich der Darstellung der Fig. 1 ist an dem mobilen Mikrophon 12 ein Kommunikationsmodul 20b vorgesehen, das dem Kommunikationsmodul 20a des Belt-Packs 11 entspricht, oder im wesentlichen entspricht. Außerdem kann das mobile Mikrophon 12 gleichermaßen programmierbare oder konfigurierbare Tasten 26e, 26f aufweisen, mit denen bestimmte Voreinstellungen oder Konfigurationen durchführbar sind.

Das Mikrophon 12 dient vornehmlich zur Übertragung von Audio-Informationen von dem Mikrophon zu einem anderen Teilnehmer, z. B. zu der Vermittlungsstelle 15b. Es sind allerdings auch Mikrophone 12 als Netzwerkgeräte im Sinne der vorliegenden Patentanmeldung anzusehen, die zusätzlich einen in Fig. 1 nicht dargestellten Lautsprecher, oder einen Anschluss für einen nicht dargestellten Lautsprecher aufweisen.

Von der Erfindung sind insoweit Netzwerkgeräte für Intercom-Netzwerke umfasst, die eine bi-direktionale Kommunikation mit anderen Teilnehmern des Intercom-Netzwerkes ermöglichen.

## Patentansprüche

1. Netzwerkgerät (10, 11, 12) für ein Intercom-Netzwerk (13), zur Ermöglichung einer Duplex-Audio-Kommunikation, mit anderen Teilnehmern (14a, 14b, 14c, 14d, 14e, 14f) des Intercom-Netzwerkes, umfassend ein Gehäuse (33) und ein darin oder daran angeordnetes Kommunikationsmodul (20a, 20b), mit dem eine Funkverbindung zur Übermittlung von Audio-Signalen an einen anderen Teilnehmer herstellbar ist, wobei die Funkverbindung dem DECT-Protokoll oder einem anderen Protokoll unterliegt, wobei das Netzwerkgerät (10, 11, 12) eine Einrichtung (21) zur Verhinderung oder zur Verminderung von multipath-Interferenzen aufweist, wobei die Einrichtung einen oder mehrere Equalizer umfasst, wobei das Netzwerkgerät (11) zur Bereitstellung einer direkten Audio-Verbindung zwischen dem Netzwerkgerät und einem anderen auszuwählenden Teilnehmer des Intercom-Netzwerkes wenigstens eine programmierbare oder konfigurierbare Taste (26a, 26b, 26c, 26d, 26e, 26f) aufweist, wobei das Netzwerkgerät (10) als ein mobiles, von einer Person tragbares Gerät (11, 12) ausgebildet ist, und wobei das Netzwerkgerät (10) als Belt-Pack (11) ausgebildet ist.

2. Netzwerkgerät nach Anspruch 1, **dadurch gekennzeichnet, dass** das Netzwerkgerät (11) einen Lautsprecher und ein Mikrophon und/oder einen Anschluss für einen Lautsprecher und ein Mikrophon aufweist.

3. Netzwerkgerät nach einem der vorangegangenen Ansprüche, **dadurch gekennzeichnet, dass** die Einrichtung (21) einen RF-Filter umfasst.

4. Netzwerkgerät nach einem der vorangegangenen Ansprüche, **dadurch gekennzeichnet, dass** die Einrichtung (21) innerhalb des Gehäuses (33) angeordnet ist.

## Claims

1. Network device (10, 11, 12) for an intercom network (13), to enable duplex-audio communication with other participants (14a, 14b, 14c, 14d, 14e, 14f) of the intercom network, comprising a housing (33) and a communication module (20a, 20b) arranged therein or thereon, with which a radio connection can be created for transmitting audio signals to another participant, wherein the radio connection is subject to the DECT protocol or another protocol, wherein the network device (10, 11, 12) has an apparatus (21) to prevent or avoid multipath interferences, wherein the apparatus comprises one or more equalizers, wherein the network device (11) has at least one programmable or configurable key (26a, 26b, 26c, 26d, 26e, 26f) for providing a direct audio connection between the network device and another participant of the intercom network to be selected, wherein the network device (10) is designed as a mobile device (11, 12) that can be carried by a person, and wherein the network device (10) is designed as a belt pack (11).

2. Network device according to claim 1, **characterised in that** the network device (11) has a loudspeaker and a microphone and/or a connector for a loudspeaker and a microphone.

3. Network device according to one of the preceding claims, **characterised in that** the apparatus (21) comprises an RF filter.

4. Network device according to one of the preceding claims, **characterised in that** the apparatus (21) is arranged inside the housing (33).

## Revendications

1. Dispositif de réseau (10, 11, 12) pour un réseau d'intercommunication (13), destiné à permettre une communication audio duplex, avec d'autres utilisateurs (14a, 14b, 14c, 14d, 14e, 14f) du réseau d'intercommunication, comprenant un boîtier (33) et un module de communication (20a, 20b) disposé dans ou sur celui-ci et avec lequel une liaison radio pour la transmission de signaux audio à un autre abonné peut être établie, la liaison radio étant soumise au protocole DECT ou à un autre protocole,
**caractérisé en ce que** le dispositif de réseau (10, 11, 12) présente un moyen (21) pour empêcher ou pour réduire les interférences multitrajets, le moyen comprenant un ou plusieurs égaliseurs, dans lequel le dispositif de réseau (11) présente au moins une touche programmable ou configurable (26a, 26b, 26c, 26d, 26e, 26f) pour fournir une liaison audio directe entre le dispositif de réseau et un autre abonné du réseau d'intercommunication à sélectionner, dans lequel le dispositif de réseau (10) est conçu sous la forme d'un dispositif mobile (11, 12) pouvant être porté par une personne et dans lequel le dispositif de réseau (10) est conçu sous la forme d'un boitier de ceinture (11).

2. Dispositif de réseau selon la revendication 1, **caractérisé en ce que** le dispositif de réseau (11) présente un haut-parleur et un microphone et/ou une connexion pour un haut-parleur et un microphone.

3. Dispositif de réseau selon l'une des revendications précédentes, **caractérisé en ce que** le moyen (21) comprend un filtre RF.

4. Dispositif de réseau selon l'une des revendications précédentes, **caractérisé en ce que** le moyen (21) est disposé à l'intérieur du boîtier (33).
